# FASCICULE DE BREVET EUROPEEN

(11) **EP 2 528 965 B1**
(45) Date de publication et mention de la délivrance du brevet: **03.06.2015**
(21) Numéro de dépôt: 11701501.6
(22) Date de dépôt: 21.01.2011
(51) Int. Cl.: C08J 3/00, C08K 5/01, C08L 9/00, C09K 3/10, C08K 5/40

(54) **PROCÉDÉ DE FACRICATION D'UNE COMPOSITION D'ÉLASTOMÈRE À PROPRIÉTÉ AUTO-OBTURANTE**
VERFAHREN ZUR HERSTELLUNG EINER SELBSTABDICHTENDEN ELASTOMERZUSAMMENSETZUNG
METHOD FOR PREPARING SELF-SEALING ELASTOMER COMPOSITION

(30) Priorité: 28.01.2010 FR 1050598
(43) Date de publication de la demande: 05.12.2012
(73) Titulaire: Compagnie Générale des Etablissements Michelin, 63000 Clermont-Ferrand (FR); MICHELIN Recherche et Technique S.A., 1763 Granges-Paccot (CH)
(72) Inventeur: VOGE, Bozena, F-63800 Cournon d'Auvergne (FR); ARAUJO DA SILVA, José, Carlos, F-63430 Pont du Chateau (FR); MERINO LOPEZ, Jose, F-63200 Riom (FR)
(74) Mandataire: Sidhu, Alban
(86) Numéro de dépôt international: PCT/EP2011/050859
(87) Numéro de publication internationale: WO 2011/092125

(56) Documents cités:
- WO-A1-2009/059709
- FR-A1- 2 845 093
- FR-A1- 2 877 348
- US-A- 5 085 942
- DATABASE WPI Week 200680 Thomson Scientific, London, GB; AN 2006-785822 XP002596387, & JP 2006 282830 A (YOKOHAMA RUBBER CO LTD) 19 octobre 2006 (2006-10-19)

## Description

La présente invention est relative aux compositions auto-obturantes (*self-sealing*) utilisables comme couches anti-crevaison dans tout type d'objet « pneumatique », c'est-à-dire, par définition, tout objet qui prend sa forme utilisable quand on le gonfle d'air.

Elle se rapporte plus particulièrement aux procédés de fabrication de compositions auto-obturantes à base d'élastomère diénique tel que du caoutchouc naturel.

Depuis quelques années, les manufacturiers de bandages pneumatiques consentent des efforts particulièrement importants afin de développer des solutions originales à un problème datant du début même de l'utilisation des roues chaussées de bandages pneumatiques de type gonflés, à savoir comment permettre au véhicule de poursuivre sa route malgré une perte importante ou totale de pression d'un ou plusieurs bandages pneumatiques. Pendant des décennies, la roue de secours fut considérée comme la solution unique et universelle. Puis, plus récemment, les avantages considérables liés à sa suppression éventuelle sont apparus. Le concept de "mobilité étendue" se développe. Les techniques associées permettent de rouler avec le même bandage pneumatique, en fonction de certaines limites à respecter, après une crevaison ou une chute de pression. Cela permet par exemple de se rendre à un point de dépannage sans devoir s'arrêter, dans des circonstances souvent hasardeuses, pour installer la roue de secours.

Des compositions auto-obturantes susceptibles de permettre d'atteindre un tel objectif, par définition aptes à assurer automatiquement, c'est-à-dire sans aucune intervention externe, l'étanchéité d'un bandage pneumatique en cas de perforation de ce dernier par un corps étranger tel qu'un clou, sont particulièrement difficiles à mettre au point.

Pour pouvoir être utilisable, une couche auto-obturante doit satisfaire à de nombreuses conditions de nature physique et chimique. Elle doit notamment être efficace dans une très large gamme de températures d'utilisation et ce pendant toute la durée de vie des bandages pneumatiques. Elle doit être capable d'obturer le trou lorsque l'objet perforant reste en place ; à l'expulsion de ce dernier, elle doit pouvoir combler le trou et rendre le bandage pneumatique étanche.

De nombreuses solutions ont certes été imaginées mais elles n'ont pas vraiment pu se développer jusqu'ici dans les bandages pneumatiques pour véhicules, particulièrement en raison de difficultés de fabrication de ces compositions auto-obturantes et donc de leur coût de revient final.

En particulier, des compositions auto-obturantes performantes, à base de caoutchouc naturel et de résine hydrocarbonée à titre d'agent tackifiant ("*tackifier*")*,* ont été décrites dans les brevets US 4 913 209, US 5 085 942 et US 5 295 525. Ces compositions se caractérisent par la présence combinée d'un taux élevé de résine hydrocarbonée, toujours supérieur à 100 parties en poids pour cent parties d'élastomère solide, et d'une quantité importante d'élastomère à l'état liquide, généralement sous la forme de caoutchouc naturel dépolymérisé (poids moléculaire typiquement compris entre 1 000 et 100 000).

Tout d'abord, un taux aussi élevé de résine, outre le fait qu'il peut être préjudiciable à l'hystérèse et en conséquence à la résistance au roulement des bandages pneumatiques, nécessite un malaxage particulièrement long et difficile de la matrice élastomérique.

L'utilisation d'une quantité importante d'élastomère liquide améliore certes la fluidité de la composition, mais une telle utilisation est source d'autres inconvénients, notamment d'un risque de fluage de la composition auto-obturante lors d'une utilisation à température relativement élevée (typiquement supérieure à 60°C) fréquemment rencontrée lors de l'utilisation de certains bandages pneumatiques.

Un autre problème majeur de fabrication peut aussi se poser : en l'absence de charge telle que du noir de carbone, ou tout au moins d'une quantité notable d'une telle charge (par ailleurs non souhaitable, de manière connue, pour ce type d'application), la composition est faiblement cohésive. Ce manque de cohésion peut être tel que le pouvoir collant de la composition, résultant du taux élevé de résine tackifiante employé, n'est plus compensé et l'emporte. Il s'ensuit alors un risque de collage parasite sur les outils de mélangeage, rédhibitoire dans des conditions de mise en oeuvre industrielle.

Poursuivant leurs recherches, les Demanderesses ont découvert un procédé de fabrication nouveau qui permet de pallier, tout au moins diminuer de manière importante, les différents inconvénients précités.

En conséquence, la présente invention concerne un procédé de fabrication d'une composition d'élastomère à propriété auto-obturante à base d'au moins (pce signifiant parties en poids pour cent parties d'élastomère solide) :
- un élastomère solide diénique insaturé ;
- entre 30 et 90 pce d'une résine hydrocarbonée ;
- 0 à moins de 30 pce de charge ;
- entre 0,5 et 15 pce de polysulfure de thiurame,

dans lequel, au cours d'une première étape ou étape (a), on prépare un masterbatch comportant au moins l'élastomère solide diénique insaturé et entre 30 et 90 pce d'une résine hydrocarbonée, en mélangeant ces différents composants dans un mélangeur à une température ou jusqu'à une température dite "de mélangeage à chaud" qui est supérieure à la température de ramollissement de la résine hydrocarbonée.

Un tel procédé s'est avéré particulièrement bien adapté à la fabrication rapide, dans des conditions de mise en oeuvre acceptables du point de vue industriel, d'une composition auto-obturante performante à base d'élastomère diénique solide et de résine hydrocarbonée, cette composition pouvant comporter des taux élevés de résine hydrocarbonée sans nécessiter l'emploi d'élastomère à l'état liquide à titre de plastifiant.

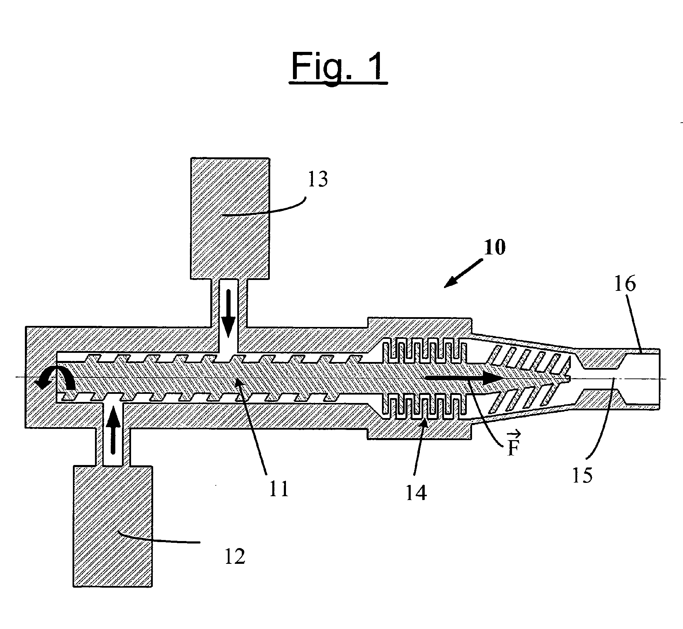

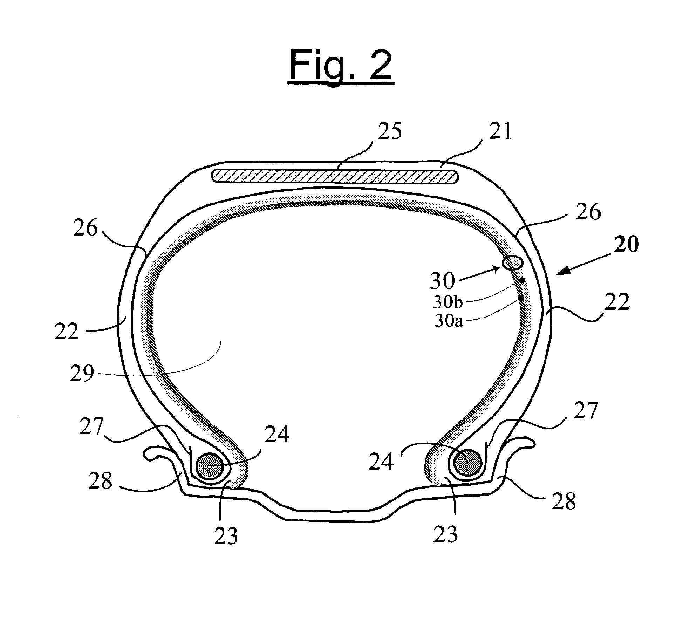

L'invention ainsi que ses avantages seront aisément compris à la lumière de la description et des exemples de réalisation qui suivent, ainsi que des figures 1 et 2 relatives à ces exemples qui schématisent de manière simple, sans respect d'une échelle spécifique :
- un exemple de dispositif d'extrusion-mélangeage utilisable pour la mise en oeuvre d'un procédé conforme à l'invention (Fig. 1) ;
- en coupe radiale, un exemple de bandage pneumatique utilisant une composition auto-obturante préparée selon le procédé conforme à l'invention (Fig. 2).

### I. DESCRIPTION DETAILLEE DE L'INVENTION

### 1-1. Définitions

Dans la présente description, sauf indication expresse différente, tous les pourcentages (%) indiqués sont des % en masse.

D'autre part, tout intervalle de valeurs désigné par l'expression "entre a et b" représente le domaine de valeurs supérieur à "a" et inférieur à "b" (c'est-à-dire bornes a et b exclues) tandis que tout intervalle de valeurs désigné par l'expression "de a à b" signifie le domaine de valeurs allant de "a" jusqu'à "b" (c'est-à-dire incluant les bornes strictes a et b).

L'abréviation "pce" (en anglais "*phr*") signifie parties en poids pour cent parties d'élastomère à l'état solide (du total des élastomères solides si plusieurs élastomères solides sont présents).

Par l'expression composition "à base de", il faut entendre de manière générale une composition comportant le mélange et/ou le produit de réaction de ses différents composants, certains de ces composants pouvant être susceptibles de (voire destinés à) réagir entre eux, au moins en partie, lors des différentes phases de fabrication de la composition, en particulier au cours de sa réticulation ou vulcanisation (cuisson) finale.

Par élastomère (ou "caoutchouc", les deux étant considérés comme synonymes) du type "diénique", doit être compris, de manière connue, un élastomère issu au moins en partie (i.e., un homopolymère ou un copolymère) de monomères diènes (i.e., de monomères porteurs de deux doubles liaisons carbone-carbone, qu'elles soient conjuguées ou non).

Ces élastomères diéniques peuvent être classés dans deux catégories, saturés ou insaturés. On entend dans la présente demande par élastomère diénique "insaturé" un élastomère diénique issu au moins en partie de monomères diènes conjugués et ayant un taux de motifs ou unités issus de diènes conjugués qui est supérieur à 30% (% en moles). C'est ainsi que sont exclus, de la définition précédente, des élastomères diéniques tels que les caoutchoucs butyl ou les copolymères de diènes et d'alpha-oléfines type EPDM qui peuvent être qualifiés d'élastomères diéniques "saturés" en raison de leur taux réduit de motifs d'origine diénique (toujours inférieur à 15% en moles). Les élastomère diéniques du type insaturés les plus courants sont ceux choisis dans le groupe constitué par les polybutadiènes, le caoutchouc naturel, les polyisoprènes de synthèse, les copolymères de butadiènes, les copolymères d'isoprène et les mélanges de tels élastomères.

### 1-2. Mesures

### 1-2-A. Viscosité Mooney

La viscosité ou plasticité Mooney caractérise de manière connue des substances solides. On utilise un consistomètre oscillant tel que décrit dans la norme ASTM D1646 (1999). La mesure de plasticité Mooney se fait selon le principe suivant : l'échantillon analysé à l'état cru (i.e., avant cuisson) est moulé (mis en forme) dans une enceinte cylindrique chauffée à une température donnée (par exemple 35°C ou 100°C). Après une minute de préchauffage, le rotor tourne au sein de l'éprouvette à 2 tours/minute et on mesure le couple utile pour entretenir ce mouvement après 4 minutes de rotation. La viscosité Mooney (ML 1+4) est exprimée en "unité Mooney" (UM, avec 1 UM=0,83 Newton.mètre).

### I-2-B. Viscosité Brookfield

La viscosité Brookfield caractérise de manière connue des substances liquides. La viscosité apparente selon le procédé Brookfield est mesurée à une température donnée (par exemple à 65°C) selon la norme européenne et internationale EN ISO 2555 (1999). On utilise par exemple un viscosimètre du type A (par exemple modèle RVT) ou du type B (par exemple modèle HAT) à une fréquence de rotation préférentiellement égale à 10 ou 20 min⁻¹, avec un N° du mobile (1 à 7) adapté au domaine de viscosité mesurée (selon Annexe A de la norme EN ISO 2555).

### I-2-C. Macrostructure des élastomères

La macrostructure (Mw, Mn et Ip) et la distribution des masses molaires d'un élastomère, qu'il soit à l'état liquide ou solide, sont des caractéristiques connues de l'homme du métier, disponibles notamment auprès des fournisseurs d'élastomères, mesurables par ailleurs par des techniques conventionnelles telles que GPC ("*Gel Permeation Chromatography*") ou SEC *("Size Exclusion Chromatography"*).

Pour rappel, l'analyse SEC, par exemple, consiste à séparer les macromolécules en solution suivant leur taille à travers des colonnes remplies d'un gel poreux ; les molécules sont séparées selon leur volume hydrodynamique, les plus volumineuses étant éluées en premier. L'échantillon à analyser est simplement préalablement solubilisé dans un solvant approprié, par exemple tétrahydrofuranne à une concentration de 1 g/litre. Puis la solution est filtrée sur un filtre, par exemple de porosité 0,45 µm, avant injection dans l'appareillage. L'appareillage utilisé est par exemple une chaîne chromatographique "Waters alliance". Le solvant d'élution est par exemple le tétrahydrofuranne, le débit est de 0,7 ml/min, la température du système est de 35°C. On utilise par exemple un jeu de 4 colonnes "Waters" en série (dénominations "Styragel HMW7", " Styragel HMW6E", et deux " Styragel HT6E"). Le volume injecté de la solution de l'échantillon de polymère est par exemple de 100 µl. Le détecteur est un réfractomètre différentiel (par exemple "Waters 2410") pouvant être équipé d'un logiciel associé d'exploitation des données (par exemple "Waters Millenium"). Un étalonnage de Moore est conduit avec une série d'étalons commerciaux de polystyrène à faible Ip (inférieur à 1,2), de masses molaires connues, couvrant le domaine de masses à analyser. On déduit des données enregistrées (courbe de distribution massique des masses molaires) la masse molaire moyenne en masse (Mw), la masse molaire moyenne en nombre (Mn), ainsi que l'indice de polymolécularité (Ip = Mw/Mn).

### I-2-D. Macrostructure des résines hydrocarbonées

La macrostructure (Mw, Mn et Ip) est déterminée par SEC comme indiqué précédemment pour les élastomères : solvant tétrahydrofurane, température 35°C, concentration 1 g/litre, débit de 1 ml/min, solution filtrée sur filtre de porosité 0,45 µm avant injection (100 µl) ; étalonnage de Moore avec des étalons de polystyrène ; jeu de 3 colonnes "Waters" en série ("Styragel HR4E", "Styragel HR1" et "Styragel HR 0.5"), détection par réfractomètre différentiel (par exemple "WATERS 2410") pouvant être équipé d'un logiciel d'exploitation (par exemple "Waters Millenium").

Toutes les valeurs de masses molaires indiquées dans la présente demande sont donc relatives à des courbes d'étalonnages réalisées avec des étalons de polystyrène. Toutes le valeurs de température de transition vitreuse ("Tg") sont mesurées de manière connue par DSC (*Differential Scanning Calorimetry*), selon la norme ASTM D3418 (1999).

### I-3. Procédé de l'invention

Le procédé conforme à l'invention a donc pour caractéristique essentielle de comporter une première étape ou étape (a) au cours de laquelle on prépare un masterbatch comportant au moins l'élastomère solide diénique insaturé et entre 30 et 90 pce d'une résine hydrocarbonée, en mélangeant ces différents composants dans un mélangeur à une température ou jusqu'à une température dite "de mélangeage à chaud" qui est supérieure à la température de ramollissement de la résine hydrocarbonée.

La température de mélangeage à chaud ci-dessus est bien entendu celle du masterbatch mesurable in situ et non pas la température de consigne du mélangeur lui-même.

Par "masterbatch" ("mélange-maître") ou "composition intermédiaire" doit être entendu le mélange d'au moins l'élastomère diénique solide avec la résine hydrocarbonée, mélange précurseur de la composition auto-obturante finale, prête à l'emploi. Peuvent être éventuellement incorporés à ce masterbatch divers additifs, qu'ils soient destinés au masterbatch proprement dit (par exemple un agent de stabilisation, un agent colorant ou anti-UV, un antioxydant, etc.) ou à la composition auto-obturante finale à laquelle est destiné le masterbatch.

Le masterbatch peut être fabriqué dans tout outil de mélangeage, notamment dans un mélangeur à palette, un mélangeur à cylindres, une boudineuse, tout mélangeur capable de mélanger, malaxer ses différents composants suffisamment jusqu'à l'obtention d'un mélange intime homogène desdits composants. De préférence, on utilise un mélangeur-extrudeur à vis, à pas constant ou non, apte de manière connue à introduire un cisaillement important du mélange (élastomère diénique et résine) en cours de formation.

A l'état initial, c'est-à-dire avant son contact avec l'élastomère solide, la résine hydrocarbonée peut se présenter à l'état solide ou à l'état liquide. Lors de la mise en contact de l'élastomère solide et de la résine hydrocarbonée, cette dernière peut se trouver à l'état solide ou, selon un mode de réalisation plus préférentiel, déjà à l'état liquide ; il suffit pour cela de chauffer la résine à une température supérieure à sa température de ramollissement.

Selon le type de résine hydrocarbonée utilisée, la température maximale de mélangeage à chaud est préférentiellement supérieure à 70°C, de préférence supérieure à 80°C, par exemple comprise entre 100°C et 150°C.

Pour un mélangeage optimal du masterbatch, la résine hydrocarbonée est préférentiellement injectée à l'état liquide, sous pression, dans le mélangeur. Selon un autre mode de réalisation préférentiel, combiné ou non au précédent, l'étape (a) de mélangeage à chaud est conduite à l'abri de l'oxygène. L'injection sous pression de la résine, à une température à laquelle celle-ci est complètement fondue, a l'avantage d'introduire dans la chambre de mélangeage du mélangeur une résine dégazée, plus stable mécaniquement et chimiquement.

Selon un mode de réalisation préférentiel, le procédé de l'invention comporte au moins une étape (b) subséquente à l'étape (a) au cours de laquelle on incorpore au masterbatch ainsi préparé, de préférence en totalité ou pour au moins 50% en poids, le polysulfure de thiurame, en mélangeant le tout, dans le même mélangeur ou dans un mélangeur différent.

Cette étape (b) d'incorporation de tout ou partie du polysulfure de thiurame peut être conduite sur le même mélangeur que celui de l'étape (a) qui précède, préférentiellement un mélangeur-extrudeur à vis, ou bien sur un autre type de mélangeur, par exemple un autre mélangeur-extrudeur à vis ou un mélangeur externe à cylindres.

Selon un mode de réalisation préférentiel, en particulier lorsqu'on utilise un mélangeur externe à cylindres, l'étape (b) est conduite à une température ou jusqu'à une température maximale qui est maintenue inférieure à la température de ramollissement de la résine, ceci afin de limiter les risques de collant parasite excessif du masterbatch à l'outil de mélangeage. Ainsi, selon le type de résine hydrocarbonée utilisée, la température de mélangeage de l'étape (b) peut être préférentiellement inférieure à 50°C, plus préférentiellement comprise entre 20°C et 40°C.

Selon un autre mode de réalisation particulier, indépendamment de la température de ramollissement de la résine, et ceci quel que soit l'outil de mélangeage utilisé pour l'étape (b), cette dernière est conduite à une température ou jusqu'à une température maximale qui est maintenue inférieure à 130°C, de préférence inférieure à 100°C, en particulier inférieure à 80°C.

Entre les étapes (a) et (b) décrites ci-dessus peut être intercalée si besoin est une étape intermédiaire de refroidissement du masterbatch afin d'amener sa température à la valeur souhaitée avant début de l'étape (b), qu'il s'agisse d'une température visée inférieure à la température de ramollissement de la résine, ou, indépendamment, d'une température visée inférieure à 130°C, préférentiellement inférieure à 100°C, en particulier inférieure à 80°C, ceci avant introduction (étape (b)) du polysulfure de thiurame dans le masterbatch précédemment fabriqué.

Lorsqu'une charge telle que du noir de carbone est utilisée, elle peut être introduite au cours de l'étape (a) c'est-à-dire en même temps que l'élastomère diénique insaturé solide et la résine hydrocarbonée, ou bien au cours d'une étape postérieure à l'étape (a), de préférence au cours de l'étape (b) d'incorporation de tout partie du polysulfure de thiurame. On a constaté qu'une très faible proportion de noir de carbone, préférentiellement comprise entre 0,5 et 2 pce, améliorait encore le mélangeage et la fabrication de la composition, ainsi que son extrudabilité finale.

Le procédé précédemment décrit permet de préparer une composition apte à remplir une fonction anti-crevaison efficace vis-à-vis des objets pneumatiques dans lesquels elle est utilisée. En particulier, il ne nécessite pas l'ajout d'un plastifiant liquide tel qu'un élastomère liquide, qui peut être préjudiciable comme on l'a déjà dit en introduction du présent mémoire, lorsqu'un tel plastifiant est utilisé en grande quantité, aux propriétés de fluidité et donc entraîner des risques de fluage excessif de la composition lors d'une utilisation à une température relativement élevée.

Toutefois, selon un mode de réalisation particulier de l'invention, il peut être utile dans certains cas, selon l'application particulière visée, d'ajouter une étape d'incorporation d'un plastifiant liquide (à 23°C) dit "à basse Tg", de préférence en faible quantité (taux inférieur à 60 pce), dont la fonction est de ramollir la composition auto-obturante en diluant la matrice d'élastomère diénique et la résine hydrocarbonée, pouvant améliorer en particulier les performances d'auto-obturation "à froid" (c'est-à-dire typiquement pour une température inférieure à 0°C) ; sa Tg est par définition inférieure à -20°C, elle est de préférence inférieure à -40°C.

Le plastifiant liquide optionnel peut être incorporé à tout moment, en tout ou partie au cours de l'une quelconque des étapes du procédé de l'invention, notamment au cours de l'étape (a) de fabrication du masterbatch lui-même (dans ce cas, avant, pendant ou après incorporation de la résine hydrocarbonée dans l'élastomère diénique), "à chaud" (c'est-à-dire à température supérieure à la température de ramollissement de la résine) ou à une température plus basse, ou par exemple après la fabrication du masterbatch, (dans ce cas, avant, pendant ou après ajout de tout ou partie du polysulfure de thiurame), voire même au cours de la mise en forme (extrusion) finale de la composition).

Selon un mode de réalisation particulier, on introduit par exemple, au moins en partie, le plastifiant liquide au cours de l'étape (a) de fabrication du masterbatch lui-même, plus préférentiellement dans ce cas soit en même temps que la résine hydrocarbonée, soit après introduction de cette dernière. Selon un mode de réalisation avantageux, un mélange de la résine hydrocarbonée et du plastifiant liquide pourra être préparé préalablement à l'incorporation dans la matrice d'élastomère diénique solide.

Selon un autre mode de réalisation particulier, on introduit par exemple, au moins en partie, le plastifiant liquide au cours de l'étape (b) d'incorporation de l'agent de réticulation.

Selon un autre mode de réalisation particulier, le plastifiant liquide peut être incorporé également au cours d'une étape (c) postérieure à l'étape (b), c'est-à-dire après incorporation de l'agent de réticulation, dans le même mélangeur ou un mélangeur différent de celui de l'étape (b), qu'il s'agisse par exemple d'un mélangeur-extrudeur à vis ou d'un mélangeur externe à cylindres. Cette incorporation est possible sur le même mélangeur externe mais il peut être avantageux d'utiliser un mélangeur-extrudeur à vis dans lequel on introduit le mélange issu de l'étape (b) puis le plastifiant liquide, un tel mélangeur extrudeur étant équipé d'une zone imposant un fort cisaillement et donc permettant une bonne homogénéisation de la composition auto-obturante finale.

Selon un autre mode de réalisation particulier, si la totalité de l'agent de réticulation n'est pas introduite au cours de l'étape (b), alors le complément de cet agent de réticulation peut être introduit à l'étape (a) ou à l'étape (c) supplémentaire décrite ci-dessus.

Il est aussi possible de réaliser successivement toutes les étapes de fabrication de la composition auto-obturante avec un seul outil, un mélangeur-extrudeur à vis équipé des moyens d'introduction et de dosage des différents constituants disposés de façon décalée le long de la chambre de mélangeage, de zones homogénéisatrices appropriées et d'une filière adaptée au semi-fini. Cela permet de réaliser avec un même outil toutes les étapes de préparation de la composition auto-obturante.

En sortie de l'étape (b) ou optionnellement de l'étape (c) ci-dessus décrite, la composition auto-obturante finale est terminée, elle est mise en forme dimensionnellement de manière connue en soi, par exemple par extrusion à travers une filière de dimensions adaptées au produit semi-fmi choisi, par exemple sous la forme d'une couche de caoutchouc de relative grande largeur, d'une bandelette étroite ou d'un profilé apte à être directement utilisé dans l'assemblage d'une ébauche de bandage pneumatique ou encore une bande réutilisable ultérieurement dans un outil d'extrusion.

### I-4. Formulation de la composition à propriété auto-obturante

La composition ou matière auto-obturante susceptible d'être préparée selon le procédé de l'invention est donc une composition élastomère comportant au moins un élastomère solide diénique insaturé, préférentiellement à titre d'élastomère unique ou majoritaire, entre 30 et 90 pce d'une résine plastifiante hydrocarbonée et entre 0,5 et 15 pce de polysulfure de thiurame ; outre divers additifs éventuels, elle peut comporter ou non une faible fraction (moins de 30 pce) de charge optionnelle. Sa formulation est décrite plus en détail ci-après.

### a) Elastomère diénique

Par "élastomère diénique insaturé", doit être compris bien entendu un seul élastomère diénique insaturé ou un mélange d'élastomères diéniques insaturés.

On utilise préférentiellement un élastomère diénique choisi dans le groupe constitué par les polybutadiènes (BR), le caoutchouc naturel (NR), les polyisoprènes de synthèse (IR), les copolymères de butadiènes (par exemple de butadiène-styrène ou SBR), les copolymères d'isoprène (autres que caoutchouc butyl) et les mélanges de tels élastomères. Plus préférentiellement, cet élastomère diénique insaturé de la composition de l'invention est un élastomère diénique choisi dans le groupe constitué par les polybutadiènes (BR), le caoutchouc naturel (NR), les polyisoprènes de synthèse (IR), les copolymères de butadiènes et les mélanges de tels élastomères.

Comme polybutadiènes, on peut citer notamment ceux ayant une teneur en unités -1,2 comprise entre 4% et 80% ou ceux ayant une teneur en cis-1,4 supérieure à 80%. Comme copolymères de butadiène, on peut citer notamment les copolymères de butadiène-styrène (SBR), les copolymères de butadiène-isoprène (BIR), les copolymères de styrène-butadiène-isoprène (SBIR). Conviennent notamment les copolymères SBR ayant une teneur en styrène comprise entre 5% et 50% en poids et plus particulièrement entre 20% et 40%, une teneur en liaisons -1,2 de la partie butadiénique comprise entre 4% et 65% , une teneur en liaisons trans-1,4 comprise entre 20% et 80%, les copolymères BIR ayant une teneur en isoprène comprise entre 5% et 90% en poids et une Tg de -40°C à -80°C, les copolymères SBIR ayant une teneur en styrène comprise entre 5% et 50% en poids et plus particulièrement comprise entre 10% et 40%, une teneur en isoprène comprise entre 15% et 60% en poids et plus particulièrement entre 20% et 50%, une teneur en butadiène comprise entre 5% et 50% en poids et plus particulièrement comprise entre 20% et 40%, une teneur en unités -1,2 de la partie butadiénique comprise entre 4% et 85%, une teneur en unités trans -1,4 de la partie butadiénique comprise entre 6% et 80%, une teneur en unités -1,2 plus -3,4 de la partie isoprénique comprise entre 5% et 70% et une teneur en unités trans -1,4 de la partie isoprénique comprise entre 10% et 50%, et plus généralement tout copolymère SBIR ayant une Tg comprise entre -20°C et -70°C.

Selon un premier mode de réalisation particulièrement préférentiel, l'élastomère diénique insaturé solide est un élastomère isoprénique. Par élastomère isoprénique, on entend un homopolymère ou un copolymère d'isoprène, en d'autres termes un élastomère diénique insaturé choisi dans le groupe constitué par le caoutchouc naturel (NR), les polyisoprènes de synthèse (IR), les copolymères de butadiène-isoprène (BIR), les copolymères de styrène-isoprène (SIR), les copolymères de styrène-butadiène-isoprène (SBIR) et les mélanges de ces élastomères. Plus préférentiellement, est utilisé du caoutchouc naturel ou un polyisoprène cis-1,4 de synthèse, seul ou en coupage (mélange) avec au moins un autre élastomère diénique insaturé tel que précité, par exemple sous forme d'un coupage NR/BR, NR/SBR, IR/BR ou IR/SBR, en particulier sous forme d'un coupage NR/BR.

Selon un autre mode de réalisation particulièrement préférentiel, l'élastomère diénique insaturé solide est un homopolymère ou copolymère de butadiène, plus préférentiellement un homopolymère de butadiène, en d'autres termes un polybutadiène ; préférentiellement, ce polybutadiène a un taux (% molaire) de liaison cis-1,4 qui est supérieur à 90%, plus préférentiellement supérieur à 95%. Il peut être utilisé seul ou en coupage (mélange) avec au moins un autre élastomère diénique insaturé tel que précité.

Les élastomères ci-dessus peuvent être par exemple à blocs, statistiques, séquencés, microséquencés, et être préparés en dispersion ou en solution ; ils peuvent être couplés et/ou étoilés et/ou branchés ou encore fonctionnalisés, par exemple avec un agent de couplage et/ou d'étoilage ou de fonctionnalisation. Pour un couplage à du noir de carbone, on peut citer par exemple des groupes fonctionnels comprenant une liaison C-Sn ou des groupes fonctionnels aminés tels que benzophénone par exemple ; pour un couplage à une charge inorganique renforçante telle que silice, on peut citer par exemple des groupes fonctionnels silanol ou polysiloxane ayant une extrémité silanol (tels que décrits par exemple dans US 6 013 718), des groupes alkoxysilanes (tels que décrits par exemple dans US 5 977 238), des groupes carboxyliques (tels que décrits par exemple dans US 6 815 473 ou US 2006/0089445) ou encore des groupes polyéthers (tels que décrits par exemple dans US 6 503 973). A titre d'autres exemples de tels élastomères fonctionnalisés, on peut citer également des élastomères (tels que SBR, BR, NR ou IR) du type époxydés.

L'élastomère diénique insaturé de la composition de l'invention est par définition solide. Par opposition à liquide, on entend par solide toute substance n'ayant pas la capacité de prendre à terme, au plus tard au bout de 24 heures, sous le seul effet de la gravité et à température ambiante (23°C), la forme du récipient qui la contient.

Par opposition à des élastomères du type liquides utilisables éventuellement comme plastifiants liquides dans la composition de l'invention, cet élastomère diénique insaturé solide se caractérise par une viscosité très élevée : sa viscosité Mooney à l'état cru (i.e., non réticulé) ML (1+4), mesurée à 100°C, est de préférence supérieure à 20, plus préférentiellement supérieure à 30, en particulier comprise entre 30 et 130.

Selon une autre définition possible, on entend également par élastomère solide un élastomère à haute masse molaire, c'est-à-dire présentant typiquement une masse molaire moyenne en nombre (Mn) qui est supérieure à 100 000 g/mol ; de préférence, dans un tel élastomère solide, au moins 80%, plus préférentiellement au moins 90% de l'aire de la distribution des masses molaires (mesurée par SEC) est située au-delà de 100 000 g/mol.

De préférence, la masse molaire moyenne en nombre (Mn) de l'élastomère diénique insaturé est comprise entre 100 000 et 5 000 000 g/mol, plus préférentiellement entre 150 000 et 4 000 000 g/mol ; en particulier elle est comprise entre 200 000 et 3 000 000 g/mol, plus particulièrement entre 200 000 et 1 500 000 g/mol. Préférentiellement, son indice de polymolécularité Ip (Mw/Mn) est compris entre 1,0 et 10,0, en particulier compris entre 1,0 et 3,0 en ce qui concerne un polybutadiène ou copolymère de butadiène, entre 3,0 et 8,0 en ce qui concerne du caoutchouc naturel ou un polyisoprène de synthèse.

L'homme du métier saura ajuster, à la lumière de la présente description et en fonction de l'application particulière visée pour la composition à propriété auto-obturante, la masse molaire moyenne et/ou la distribution des masses molaires des élastomères A et B. Selon un mode de réalisation particulier de l'invention, il pourra par exemple opter pour une large distribution de masses molaires. S'il souhaite privilégier la fluidité de la composition auto-obturante, il pourra favoriser plutôt la proportion de basses masses molaires. Selon un autre mode de réalisation particulier, combinable ou non au précédent, il pourra aussi privilégier la proportion de masses molaires intermédiaires en vue d'optimiser plutôt la fonction d'auto-obturation (remplissage) de la composition. Selon un autre mode de réalisation particulier, il pourra privilégier plutôt la proportion de hautes masses molaires en vue d'augmenter la tenue mécanique de la composition auto-obturante.

L'obtention de ces différentes distributions de masses molaires pourra se faire par exemple par mélangeage d'élastomères diéniques (élastomères A et/ou élastomères B) de départ différents.

Selon un mode de réalisation préférentiel, l'élastomère solide diénique insaturé ci-dessus constitue le seul élastomère solide présent dans la composition auto-obturante de l'invention, c'est-à-dire que le taux de cet élastomère solide dans la composition est alors de 100 pce.

Selon un autre mode de réalisation particulier de l'invention, lorsqu'il est utilisé en mélange avec d'autres types (autres que diéniques insaturés) d'élastomères solides, l'élastomère solide diénique insaturé ci-dessus constitue préférentiellement l'élastomère solide majoritaire en poids dans la composition de l'invention : son taux est plus préférentiellement supérieur à 50 pce, encore plus préférentiellement supérieur à 70 pce, en particulier supérieur à 80 pce. Ansi, selon des modes de réalisation particuliers de l'invention, l'élastomère solide diénique insaturé pourrait être associé à d'autres élastomères (solides) minoritaires en poids, qu'il s'agisse d'élastomères diéniques saturés (par exemple butyl), ou encore d'élastomères autres que diéniques, par exemple des élastomères thermoplastiques styréniques (dits "TPS"), par exemple choisis dans le groupe constitué par les copolymères blocs styrène/ butadiène/ styrène (SBS), styrène/ isoprène/ styrène (SIS), styrène/ butadiène/ isoprène/ styrène (SBIS), styrène/ isobutylène/ styrène (SIBS), styrène/ éthylène/ butylène/ styrène (SEBS), styrène/ éthylène/ propylène/ styrène (SEPS), styrène/ éthylène/ éthylène/ propylène/ styrène (SEEPS) et les mélanges de ces copolymères.

De manière surprenante, cet élastomère diénique insaturé, non chargé (ou très faiblement chargé), s'est révélé capable, après ajout d'une résine hydrocarbonée thermoplastique dans le domaine étroit préconisé, de remplir la fonction d'une composition auto-obturante performante, comme cela est expliqué en détail dans la suite de l'exposé.

### b) Résine hydrocarbonée

Le deuxième constituant essentiel de la composition auto-obturante est une résine hydrocarbonée. La dénomination "résine" est réservée dans la présente demande, par définition connue de l'homme du métier, à un composé qui est solide à température ambiante (23°C), par opposition à un composé plastifiant liquide tel qu'une huile.

Les résines hydrocarbonées sont des polymères bien connus de l'homme du métier, essentiellement à base de carbone et hydrogène, utilisables en particulier comme agents plastifiants ou agents tackifiants dans des matrices polymériques. Elles sont par nature miscibles (i.e., compatibles) aux taux utilisés avec les compositions de polymères auxquelles elles sont destinées, de manière à agir comme de véritables agents diluants. Elles ont été décrites par exemple dans l'ouvrage intitulé *"*Hydrocarbon Resins" de R. Mildenberg, M. Zander et G. Collin (New York, VCH, 1997, ISBN 3-527-28617-9) dont le chapitre 5 est consacré à leurs applications, notamment en caoutchouterie pneumatique (5.5. *"Rubben Tires and Mechanical Goods*"). Elles peuvent être aliphatiques, cycloaliphatiques, aromatiques, aromatiques hydrogénées, du type aliphatique/aromatique c'est-à-dire à base de monomères aliphatiques et/ou aromatiques. Elles peuvent être naturelles ou synthétiques, à base ou non de pétrole (si tel est le cas, connues aussi sous le nom de résines de pétrole). Leur Tg est de préférence supérieure à 0°C, notamment supérieure à 20°C (le plus souvent comprise entre 30°C et 95°C).

De manière connue, ces résines hydrocarbonées peuvent être qualifiées aussi de résines thermoplastiques en ce sens qu'elles se ramollissent par chauffage et peuvent ainsi être moulées. Elles peuvent se définir également par un point ou température de ramollissement (en anglais, *"softening point*"), température à laquelle le produit, par exemple sous forme de poudre, s'agglutine ; cette donnée tend à remplacer le point de fusion, assez mal défini, des résines en général. La température de ramollissement d'une résine hydrocarbonée est généralement supérieure d'environ 50 à 60°C à sa valeur de Tg.

Dans la composition de l'invention, la température de ramollissement de la résine est préférentiellement supérieure à 40°C (en particulier comprise entre 40°C et 140°C), plus préférentiellement supérieure à 50°C (en particulier comprise entre 50°C et 135°C).

Ladite résine est utilisée à un taux pondéral compris entre 30 et 90 pce. En dessous de 30 pce, la performance anti-crevaison s'est avérée insuffisante en raison d'une rigidité trop importante de la composition, alors qu'au-delà de 90 pce, on s'expose à une tenue mécanique insuffisante du matériau avec en outre un risque de performance dégradée à haute température (typiquement supérieure à 70°C). Pour ces raisons, le taux de résine est préférentiellement compris entre 40 et 80 pce, plus préférentiellement encore au moins égal à 45 pce, notamment compris dans un domaine de 45 à 75 pce.

Selon un mode de réalisation préférentiel de l'invention, la résine hydrocarbonée présente au moins une quelconque, plus préférentiellement l'ensemble des caractéristiques suivantes :
- une Tg supérieure à 25°C ;
- un point de ramollissement supérieur à 50°C (en particulier compris entre 50°C et 135°C) ;
- une masse moléculaire moyenne en nombre (Mn) comprise entre 400 et 2000 g/mol ;
- un indice de polymolécularité (Ip) inférieur à 3 (rappel : Ip = Mw/Mn avec Mw masse moléculaire moyenne en poids).

Plus préférentiellement, cette résine hydrocarbonée présente au moins une quelconque, plus préférentiellement l'ensemble des caractéristiques suivantes :
- une Tg comprise entre 25°C et 100°C (notamment entre 30°C et 90°C) ;
- un point de ramollissement supérieur à 60°C, en particulier compris entre 60°C et 135°C ;
- une masse moyenne Mn comprise entre 500 et 1500 g/mol ;
- un indice de polymolécularité Ip inférieur à 2.

Le point de ramollissement est mesuré selon la norme ISO 4625 (méthode "Ring and Ball"). La macrostructure (Mw, Mn et Ip) est déterminée par chromatographie d'exclusion stérique (SEC) comme indiqué en introduction de la demande.

A titres d'exemples de telles résines hydrocarbonées, on peut citer celles choisies dans le groupe constitué par les résines d'homopolymère ou copolymère de cyclopentadiène (en abrégé CPD) ou dicyclopentadiène (en abrégé DCPD), les résines d'homopolymère ou copolymère terpène, les résines d'homopolymère ou copolymère terpène phénol, les résines d'homopolymère ou copolymère de coupe C5, les résines d'homopolymère ou copolymère de coupe C9, les résines d'homopolymère ou copolymère d'alpha-méthyl-styrène et les mélanges de ces résines. Parmi les résines de copolymères ci-dessus, on peut citer plus particulièrement celles choisies dans le groupe constitué par les résines de copolymère (D)CPD/ vinylaromatique, les résines de copolymère (D)CPD/ terpène, les résines de copolymère (D)CPD/ coupe C5, les résines de copolymère (D)CPD/ coupe C5, les résines de copolymère (D)CPD/ coupe C9, les résines de copolymère terpène/ vinylaromatique, les résines de copolymère terpène/ phénol, les résines de copolymère coupe C5/ vinylaromatique, et les mélanges de ces résines.

Le terme "terpène" regroupe ici de manière connue les monomères alpha-pinène, beta-pinène et limonène ; préférentiellement est utilisé un monomère limonène, composé se présentant de manière connue sous la forme de trois isomères possibles : le L-limonène (énantiomère lévogyre), le D-limonène (énantiomère dextrogyre), ou bien le dipentène, racémique des énantiomères dextrogyre et lévogyre. A titre de monomère vinylaromatique conviennent par exemple le styrène, l'alpha-méthylstyrène, l'ortho-méthylstyrène, le méta-méthylstyrène, le para-méthylstyrène, le vinyle-toluène, le para-tertiobutylstyrène, les méthoxystyrènes, les chlorostyrènes, les hydroxystyrènes, le vinylmésitylène, le divinylbenzène, le vinylnaphtalène, tout monomère vinylaromatique issu d'une coupe C₉ (ou plus généralement d'une coupe C₈ à C₁₀).

Plus particulièrement, on peut citer les résines choisies dans le groupe constitué par les résines d'homopolymère (D)CPD, les résines de copolymère (D)CPD/ styrène, les résines de polylimonène, les résines de copolymère limonène/ styrène, les résines de copolymère limonène/ D(CPD), les résines de copolymère coupe C5/ styrène, les résines de copolymère coupe C5/ coupe C9, et les mélanges de ces résines.

Toutes les résines ci-dessus sont bien connues de l'homme du métier et disponibles commercialement, par exemple vendues par la société DRT sous la dénomination "Dercolyte" pour ce qui concerne les résines polylimonène, par la société Neville Chemical Company sous dénomination "Super Nevtac", par Kolon sous dénomination "Hikorez" ou par la société Exxon Mobil sous dénomination "Escorez" pour ce qui concerne les résines coupe C₅/ styrène ou résines coupe C₅/ coupe C₉, ou encore par la société Struktol sous dénomination "40 MS" ou "40 NS" (mélanges de résines aromatiques et/ou aliphatiques).

### c) Agent de réticulation

La composition préparée selon le procédé de l'invention a en outre pour caractéristique essentielle de comporter, à titre d'agent de réticulation de l'élastomère solide diénique insaturé, entre 0,5 et 15 pce de polysulfure de thiurame.

Après cuisson, un tel agent de réticulation s'est révéler apporter une cohésion suffisante à la composition, sans lui conférer une réticulation véritable : la réticulation mesurable, via une méthode de gonflement classique connue de l'homme du métier, avoisine en fait le seuil de détection. De préférence, le taux de polysulfure de thiurame est compris entre 0,5 et 10 pce, plus préférentiellement compris dans un domaine de 1 à 5 pce.

On rappelle que les polysulfures de thiurame, connus comme donneurs de soufre et accélérateurs de vulcanisation, ont pour formule (I) : 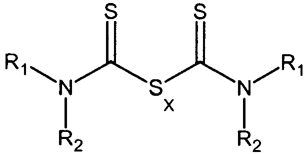 dans laquelle :
- x est un nombre (entier, ou décimal dans le cas de mélanges de polysulfures) qui est égal ou supérieur à deux, de préférence compris dans un domaine de 2 à 8 ;
- R₁ et R₂, identiques ou différents, représentent un radical hydrocarboné, de préférence choisi parmi les alkyles ayant 1 à 6 atomes de carbone, les cycloalkyles ayant 5 à 7 atomes de carbone, les aryles, aralkyles ou alkaryles ayant 6 à 10 atomes de carbone.

Dans la formule (I) ci-dessus, R₁ et R₂ pourraient former un radical hydrocarboné bivalent comportant 4 à 7 atomes de carbone.

De tels polysulfures de thiurame sont préférentiellement choisis dans le groupe constitué par le disulfure de tétrabenzylthiurame ("TBzTD"), le disulfure de tétraméthylthiurame ("TMTD"), le tétrasulfure de dipentaméthylènethiurame ("DPTT") et les mélanges de tels composés, ces polysulfures ayant pour rappel les formules développées suivantes :

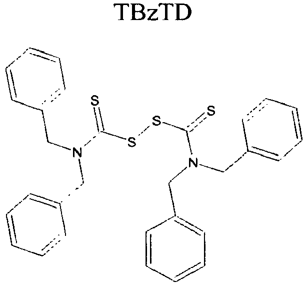

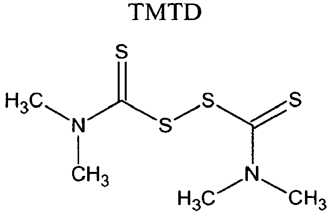

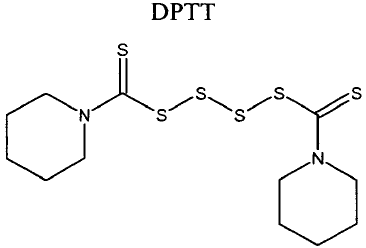

De préférence, on utilise le TBzTD, de formule (I) dans laquelle R₁ et R₂ représentent le benzyle et x est égal à 2.

La réticulation de l'élastomère solide diénique insaturé ne nécessite pas, dans la composition de l'invention, la présence d'un autre agent de réticulation, ni soufre ni autre agent de vulcanisation additionnel (donneur de soufre, accélérateur ou activateur de vulcanisation). La composition de l'invention peut donc être avantageusement dépourvue de soufre ou de tels agents de vulcanisation additionnels, ou bien n'en comporter qu'une très faible quantité, moins de 1 pce, de préférence moins de 0,5 pce, plus préférentiellement moins de 0,2 pce. Selon un autre mode de réalisation avantageux, la composition de l'invention peut être également dépourvue de zinc ou oxyde de zinc (connus comme activateurs de vulcanisation), ou bien n'en comporter qu'une très faible quantité, moins de 1 pce, de préférence moins de 0,5 pce, plus préférentiellement moins de 0,2 pce.

### d) Charge

La composition préparée selon le procédé de l'invention a pour autre caractéristique d'être non chargée ou très faiblement chargée, c'est-à-dire de comporter de 0 à moins de 30 pce d'au moins une (c'est-à-dire une ou plusieurs) telle charge optionnelle.

Par charge, on entend ici tout type de charge, qu'elle soit renforçante (typiquement à particules nanométriques, de taille moyenne en poids préférentiellement inférieure à 500 nm, notamment entre 20 et 200 nm) ou qu'elle soit non-renforçante ou inerte (typiquement à particules micrométriques, de taille moyenne en poids supérieure à 1 µm, par exemple entre 2 et 200 µm).

Ces charges, renforçantes ou pas, sont essentiellement là que pour donner de la stabilité dimensionnelle, c'est-à-dire une tenue mécanique minimale à la composition finale. On en met de préférence d'autant moins dans la composition que la charge est connue comme renforçante vis-à-vis d'un élastomère, notamment d'un élastomère diénique tel que du caoutchouc naturel ou du polybutadiène.

Une quantité trop élevée, notamment supérieure à 30 pce ne permet plus d'atteindre les propriétés minimales requises de souplesse, de déformabilité et d'aptitude au fluage. Pour ces raisons, la composition de l'invention comporte préférentiellement 0 à moins de 20 pce, plus préférentiellement 0 à moins de 10 pce de charge.

A titre d'exemples de charges connues comme renforçantes par l'homme du métier, on citera notamment du noir de carbone ou une charge inorganique renforçante telle que silice, ou un coupage de ces deux types de charge.

Comme noirs de carbone, par exemple, conviennent tous les noirs de carbone, notamment les noirs conventionnellement utilisés dans les bandages pneumatiques. Parmi ces derniers, on citera par exemple les noirs de carbone de grade (ASTM) 300, 600, 700 ou 900 (par exemple N326, N330, N347, N375, N683, N772, N990). Comme charges inorganiques renforçantes conviennent notamment des charges minérales hautement dispersibles du type silice (SiO₂), notamment les silices précipitées ou pyrogénées présentant une surface BET inférieure à 450 m²/g, de préférence de 30 à 400 m²/g.

A titre d'exemples de charges connues comme non-renforçantes ou inertes par l'homme du métier, on citera notamment des cendres (i.e., résidus de combustion), microparticules de carbonates de calcium naturels (craie) ou synthétiques, de silicates synthétiques ou naturels (tels que kaolin, talc, mica), de silices broyées, oxydes de titane, alumines ou encore aluminosilicates. A titre d'exemples de charges lamellaires, on peut citer également des particules de graphite. Des charges colorantes ou colorées par exemple par des pigments pourront être avantageusement utilisées pour colorer la composition selon la couleur désirée.

L'état physique sous lequel se présente la charge est indifférent, que ce soit sous forme de poudre, de microperles, de granulés, de billes ou toute autre forme densifiée appropriée. Bien entendu, on entend également par charge des mélanges de différentes charges, renforçantes et/ou non renforçantes.

L'homme de l'art saura, à la lumière de la présente description, ajuster le taux de charge de la composition de l'invention afin d'atteindre les niveaux de propriétés souhaités et adapter la formulation à l'application spécifique envisagée.

Selon un mode de réalisation particulier et avantageux de l'invention, si une charge renforçante est présente dans la composition, son taux est préférentiellement inférieur à 5 pce (soit entre 0 et 5 pce), en particulier inférieur à 2 pce (soit entre 0 et 2 pce). De tels taux se sont avérés particulièrement favorables au procédé de fabrication de la composition de l'invention, tout en offrant à cette dernière d'excellentes performances auto-obturantes. On utilise plus préférentiellement un taux compris entre 0,5 et 2 pce, en particulier lorsqu'il s'agit de noir de carbone.

### e) Plastifiant liquide

Tout élastomère liquide, toute huile d'extension, qu'elle soit de nature aromatique ou non-aromatique, plus généralement tout agent plastifiant liquide connu pour ses propriétés plastifiantes vis-à-vis d'élastomères, notamment diéniques, est utilisable. A température ambiante (23°C), ces plastifiants ou ces huiles, plus ou moins visqueux, sont des liquides, par opposition notamment à des résines hydrocarbonées qui sont par nature solides à température ambiante.

Pour rappel, par opposition à un solide, on entend par liquide toute substance ayant la capacité de prendre à terme, au plus tard au bout de 24 heures, sous le seul effet de la gravité et à température ambiante (23°C), la forme du récipient qui la contient.

Par opposition à des élastomères solides, les plastifiants et élastomères liquides (i.e., à faible masse molaire) se caractérisent par une viscosité très basse : de préférence, leur viscosité Brookfield mesurée à 65°C est inférieure à 2 000 000 cP (cP signifiant centipoise ; 1 cP égale à 1 mPa.s), plus préférentiellement inférieure à 1 500 000 cP; elle est notamment comprise entre 200 et 1 000 000 cP, typiquement, pour ce qui concerne les élastomères liquides, entre 2 000 et 1 000 000 cP.

Selon une autre définition possible, on entend également par élastomère liquide un élastomère dont la masse molaire moyenne en nombre (Mn) est inférieure à 100 000 g/mol ; de préférence, dans un tel élastomère liquide, au moins 80%, plus préférentiellement au moins 90%, de l'aire de la distribution des masses molaires (mesurée par SEC) est située en deçà de 100 000 g/mol.

Conviennent notamment des élastomères liquides dont la masse molaire moyenne en nombre (Mn) est comprise entre 400 et 90 000 g/mol, plus généralement entre 800 et 90 000 g/mol, par exemple sous la forme de caoutchouc naturel dépolymérisé, de BR, SBR ou IR liquides, tels que décrits par exemple dans les documents brevet US 4 913 209, US 5 085 942 et US 5 295 525 précités. Si un élastomère diénique liquide (par exemple NR, IR ou BR liquides) est utilisé comme plastifiant, il pourra être éventuellement généré in situ, c'est-à-dire lors de la fabrication même de la composition de l'invention, par exemple par un travail (thermo)mécanique (dépolymérisation par cassage de chaînes) approprié du ou des élastomère(s) solide(s) de départ. Peuvent être également utilisés des mélanges de tels élastomères liquides avec des huiles telles que décrites ci-après.

Conviennent également des huiles d'extension, notamment celles choisies dans le groupe constitué par les huiles polyoléfiniques (c'est-à-dire issues de la polymérisation d'oléfines, monooléfines ou dioléfines, par exemple du type poyléthylène glycol ou polypropylène glycol), les huiles paraffiniques, les huiles naphténiques (à basse ou haute viscosité, hydrogénées ou non), les huiles aromatiques ou DAE (*Distillate Aromatic Extracts),* les huiles MES *(Medium Extracted Solvates),* les huiles TDAE (*Treated Distillate Aromatic Extracts),* les huiles minérales, les huiles végétales (et leurs oligomères, e.g. huiles de palme, colza, soja, tournesol) et les mélanges de ces huiles.

Selon un mode de réalisation particulier, on utilise par exemple une huile du type polybutène, en particulier une huile polyisobutylène (en abrégé "PIB"), qui a démontré un excellent compromis de propriétés comparativement aux autres huiles testées, notamment à une huile conventionnelle du type paraffmique. A titre d'exemples, des huiles PIB sont commercialisées notamment par la société UNIVAR sous la dénomination "Dynapak Poly" (e.g. "Dynapak Poly 190"), par BASF sous les dénominations "Glissopal" (e.g. "Glissopal 1000") ou "Oppanol" (e.g. "Oppanol B12") ; des huiles paraffniques sont commercialisées par exemple par EXXON sous la dénomination "Telura 618" ou par Repsol sous la dénomination "Extensol 51".

Conviennent également, à titre de plastifiants liquides, des plastifiants éthers, esters, phosphates, sulfonates, plus particulièrement ceux choisis parmi esters et phosphates. A titre de plastifiants phosphates préférentiels, on peut citer ceux qui contiennent entre 12 et 30 atomes de carbone, par exemple le trioctyle phosphate. A titre de plastifiants esters préférentiels, on peut citer notamment les composés choisis dans le groupe constitué par les trimellitates, les pyromellitates, les phtalates, les 1,2-cyclohexane dicarboxylates, les adipates, les azélaates, les sébacates, les triesters de glycérol et les mélanges de ces composés. Parmi les triesters ci-dessus, on peut citer comme triesters de glycérol préférentiels ceux qui sont constitués majoritairement (pour plus de 50 %, plus préférentiellement pour plus de 80 % en poids) d'un acide gras insaturé en C₁₈, c'est-à-dire d'un acide gras choisi dans le groupe constitué par l'acide oléique, l'acide linoléique, l'acide linolénique et les mélanges de ces acides. Plus préférentiellement, qu'il soit d'origine synthétique ou naturelle (cas par exemple d'huiles végétales de tournesol ou de colza), l'acide gras utilisé est constitué pour plus de 50% en poids, plus préférentiellement encore pour plus de 80% en poids d'acide oléique. De tels triesters (trioléates) à fort taux d'acide oléique sont bien connus, ils ont été décrits par exemple dans la demande WO 02/088238 (ou US 2004/0127617), à titre d'agents plastifiants dans des bandes de roulement pour pneumatiques.

La masse molaire moyenne en nombre (Mn) des plastifiants liquides précités autres que des élastomères liquides est préférentiellement comprise entre 400 et 25 000 g/mol, plus préférentiellement encore comprise entre 800 et 10 000 g/mol (mesurée par SEC comme indiqué précédemment pour la résine hydrocarbonée). Pour des masses Mn trop basses, il peut exister un risque de migration du plastifiant à l'extérieur de la composition, tandis que des masses trop élevées peuvent entraîner une rigidification excessive de la composition. Une masse Mn comprise entre 1 000 et 4 000 g/mol s'est avérée constituer un excellent compromis pour les applications visées, en particulier pour une utilisation dans un bandage pneumatique.

En résumé, le plastifiant liquide est préférentiellement choisi dans le groupe constitué par les élastomères liquides, les huiles polyoléfmiques, les huiles naphténiques, les huiles paraffiniques, les huiles DAE, les huiles MES, les huiles TDAE, les huiles minérales, les huiles végétales, les plastifiants éthers, les plastifiants esters, les plastifiants phosphates, les plastifiants sulfonates et les mélanges de ces composés. Plus préférentiellement, ce plastifiant liquide est choisi dans le groupe constitué par les élastomères liquides, les huiles polyoléfiniques, les huiles végétales et les mélanges de ces composés.

L'homme du métier saura, à la lumière de la description et des exemples de réalisation qui suivent, ajuster la quantité de plastifiant liquide en fonction de la nature de ce dernier et des conditions particulières d'usage de la composition auto-obturante, notamment de l'objet pneumatique dans lequel elle est destinée à être utilisée.

De préférence, le taux de plastifiant liquide est compris dans un domaine de 5 à 40 pce, plus préférentiellement dans un domaine de 10 à 30 pce. En dessous des minima indiqués, la composition élastomère risque de présenter une rigidité trop forte pour certaines applications tandis qu'au-delà des maxima préconisés, on s'expose à un risque de cohésion insuffisante de la composition et de propriétés auto-obturantes dégradées.

### f) Autres additifs possibles

Divers autres additifs peuvent être ajoutés, typiquement en faible quantité (préférentiellement à des taux inférieurs à 20 pce, plus préférentiellement inférieurs à 15 pce), comme par exemple des agents de protection tels que des anti-UV, anti-oxydants ou anti-ozonants, divers autres stabilisants, des agents colorants avantageusement utilisables pour la coloration de la composition auto-obturante. Selon l'application visée, des fibres, sous forme de fibres courtes ou de pulpe, pourraient être éventuellement ajoutées pour donner plus de cohésion à la composition auto-obturante. Outre les élastomères précédemment décrits, la composition auto-obturante pourrait aussi comporter, toujours selon une fraction pondérale préférentiellement minoritaire par rapport à l'élastomère diénique insaturé, des polymères autres que des élastomères, tels que par exemple des polymères thermoplastiques.

### II. EXEMPLE DE REALISATION DE L'INVENTION

### II-1. Fabrication de la composition auto-obturante

A titre d'exemple, l'étape (a) de fabrication du masterbatch est réalisée dans un mélangeur-extrudeur à vis tel que schématisé de manière simple à la figure 1.

On voit sur cette figure 1 un exemple de mélangeur-extrudeur à vis (10) comportant essentiellement une vis (par exemple une mono-vis) d'extrusion (11), une première pompe de dosage (12) pour l'élastomère diénique insaturé (solide) et une deuxième pompe de dosage (13) pour la résine (solide ou liquide) et optionnellement le plastifiant liquide. La résine hydrocarbonée et le plastifiant liquide optionnel peuvent être introduits au moyen d'une pompe de dosage unique, s'ils ont déjà été mélangés préalablement, ou bien être introduits séparément au moyen de deux pompes de dosage séparées (une seule représentée sur la figure 1). Les pompes de dosages (12, 13) permettent de monter en pression tout en conservant la maîtrise du dosage et les caractéristiques initiales des matériaux, la dissociation des fonctions de dosages (élastomère et résine) et de mélangeage offrant en outre une meilleure maîtrise du procédé.

Les produits, poussés par la vis d'extrusion, sont intimement mélangés sous le très fort cisaillement apporté par la rotation de la vis, progressant ainsi à travers le mélangeur, par exemple jusqu'à une partie (14) dite "hacheur-homogénéisateur", zone à la sortie de laquelle le masterbatch final (15) ainsi obtenu, progressant dans le sens de la flèche (F), est finalement extrudé à travers une filière (16) permettant d'extruder le produit aux dimensions souhaitées. Selon un mode de réalisation particulier, il peut être avantageux de maintenir la partie "hacheur-homogénéisateur" à une température plus basse que celle de la vis d'extrusion, par exemple à une température comprise entre 40°C et 60°C, ceci afin de limiter le pouvoir collant du masterbatch, améliorer ainsi le travail mécanique et l'homogénéité du masterbatch.

A titre d'exemple, le masterbatch ainsi extrudé, prêt à être utilisé, peut être ensuite transféré et refroidi par exemple sur un mélangeur externe à cylindres pour introduction de l'agent de réticulation et de la charge optionnelle ; la température à l'intérieur dudit mélangeur externe est préférentiellement maintenue inférieure à la température de ramollissement de la résine, par ailleurs préférentiellement inférieure à 100°C, notamment inférieure à 80°C. Avantageusement, les cylindres ci-dessus sont refroidis, par exemple par circulation d'eau, à une température inférieure à 40°C, de préférence inférieure à 30°C, de manière à éviter ou limiter un collage parasite de la composition sur les parois du mélangeur.

11 est possible de mettre directement en forme le masterbatch en sortie du dispositif d'extrusion (10) pour faciliter son transport et/ou sa mise en place dans le mélangeur externe. On peut aussi utiliser une alimentation en continu du mélangeur externe à cylindres.

Grâce au dispositif spécifique et au procédé préférentiels décrits ci-dessus, il est possible de préparer la composition de l'invention dans des conditions industrielles satisfaisantes, sans risque de pollution des outils due à un collage parasite excessif de la composition sur les parois des mélangeurs.

### II-2. Utilisation de la composition auto-obturante comme couche anti-crevaison

La composition auto-obturante préparée selon le procédé de l'invention est un composé solide qui se caractérise notamment, grâce à sa formulation spécifique, par une très grande souplesse et haute déformabilité. Sa viscosité Mooney mesurée à 35°C à l'état cru (i.e., avant cuisson) est préférentiellement supérieure à 20, plus préférentiellement comprise entre 20 et 80, selon sa formulation particulière et l'application visée, en particulier selon la présence ou non d'un agent plastifiant liquide.

Elle peut être utilisée comme couche anti-crevaison dans tout type d'objet "pneumatique", c'est-à-dire, par définition, tout objet qui prend sa forme utilisable quand on le gonfle d'air. A titre d'exemples de tels objets pneumatiques, on peut citer les bateaux pneumatiques, les ballons ou balles utilisées pour le jeu ou le sport.

Elle est particulièrement bien adaptée à une utilisation comme couche anti-crevaison dans un objet pneumatique, produit fini ou semi-fini, en caoutchouc, notamment dans des bandages pneumatiques pour véhicule automobile tel que véhicules du type deux roues, tourisme ou industriel, ou non automobile tel que vélo, plus particulièrement dans les bandages pour véhicules tourisme susceptibles de rouler à très haute vitesse ou les bandages pour véhicules industriels tels que poids-lourd susceptibles de rouler et fonctionner sous des conditions de températures internes particulièrement élevées.

Une telle couche anti-crevaison est préférentiellement disposée sur la paroi interne de l'objet pneumatique, la recouvrant totalement ou au moins en partie, mais elle peut être également intégrée complètement à sa structure interne.

La composition auto-obturante ici décrite a l'avantage de ne présenter, dans une très large gamme de températures d'utilisation des bandages pneumatiques, pratiquement aucune pénalisation en termes de résistance au roulement par rapport à un bandage pneumatique ne comportant pas une couche auto-obturante. Comparativement aux compositions auto-obturantes usuelles, sont notablement réduits les risques d'un fluage excessif lors d'une utilisation à température relativement élevée (typiquement supérieure à 60°C), fréquemment rencontrée lors de l'utilisation de certains bandages pneumatiques. Ses propriétés auto-obturantes sont également améliorées lors d'une utilisation à basse température (typiquement inférieure à 0°C), en particulier lorsque l'élastomère solide diénique insaturé comporte un mélange de caoutchouc naturel et de polybutadiène.

A titre d'exemple, la figure 2 annexée représente de manière très schématique (sans respect d'une échelle spécifique), une coupe radiale d'un bandage pneumatique conforme à l'invention.

Ce bandage pneumatique 20 comporte un sommet 21 renforcé par une armature de sommet ou ceinture 25, deux flancs 22 et deux bourrelets 23, chacun de ces bourrelets 23 étant renforcé avec une tringle 24. Le sommet 21 est surmonté d'une bande de roulement non représentée sur cette figure schématique. Une armature de carcasse 26 est enroulée autour des deux tringles 24 dans chaque bourrelet 23, le retournement 27 de cette armature 26 étant par exemple disposé vers l'extérieur du pneumatique 20 qui est ici représenté monté sur sa jante 28. L'armature de carcasse 26 est de manière connue en soi constituée d'au moins une nappe renforcée par des câbles dits "radiaux", par exemple textiles ou métalliques, c'est-à-dire que ces câbles sont disposés pratiquement parallèles les uns aux autres et s'étendent d'un bourrelet à l'autre de manière à former un angle compris entre 80° et 90° avec le plan circonférentiel médian (plan perpendiculaire à l'axe de rotation du pneumatique qui est situé à mi-distance des deux bourrelets 23 et passe par le milieu de l'armature de sommet 25).

Le bandage pneumatique 20 est caractérisé en ce que sa paroi interne comporte un stratifié multi-couches (30) comportant deux couches (30a, 30b), auto-obturant grâce à sa première couche (30a) et étanche à l'air grâce à sa seconde couche (30b), par exemple à base de caoutchouc butyl. Les deux couches (30a, 30b) couvrent substantiellement toute la paroi interne du bandage pneumatique, se prolongeant d'un flanc à l'autre, au moins jusqu'au niveau du crochet de jante lorsque le bandage pneumatique est en position montée. Le stratifié est ici disposé de telle manière que la première couche (30a) auto-obturante soit radialement la plus interne dans le bandage pneumatique, par rapport à l'autre couche (30b). En d'autres termes, la couche (30a) auto-obturante recouvre la couche (30b) étanche à l'air du côté de la cavité interne 29 du bandage pneumatique 20.

Dans cet exemple, la couche 30b (d'épaisseur 0,7 à 0,8 mm) est à base de caoutchouc butyl, présente une formulation conventionnelle pour une "gomme intérieure" ("*inner linier*") qui définit usuellement, dans un bandage pneumatique conventionnel, la face radialement interne dudit bandage destinée à protéger l'armature de carcasse de la diffusion d'air provenant de l'espace intérieur au bandage. Cette couche 30b étanche à l'air permet donc le gonflement et le maintien sous pression du bandage 20 ; ses propriétés d'étanchéité lui permettent de garantir un taux de perte de pression relativement faible, permettant de maintenir le bandage gonflé, en état de fonctionnement normal, pendant une durée suffisante, normalement de plusieurs semaines ou plusieurs mois.

La couche 30a est quant à elle constituée d'une composition auto-obturante préparée selon le procédé conforme à l'invention, comportant dans cet exemple un élastomère diénique insaturé solide (coupage de 50 pce de NR solide avec 50 pce de BR solide ; masse molaire moyenne en nombre Mn du coupage d'élastomères égale à environ 270 000 g/mol dans la composition finale) ; une résine hydrocarbonée "Escorez 2101" de la société Exxon Mobil (Tg égale à environ 44°C ; point de ramollissement égal à environ 90 C ; Mn égale à environ 800 g/mol ; Ip égal à environ 2,1) à un taux pondéral d'environ 50 pce ; environ 15 pce d'élastomère polybutadiène liquide ("Ricon 154" de la société Sartomer Cray Valley - Tg égale à environ - 20°C ; Mn égale à environ 5 000 g/mol et Ip égal à environ 1,4) ; 3 pce de TBzTD ; elle comporte en outre une très faible quantité (environ 1 pce) de noir de carbone (N772) et environ 3 pce d'antioxydant.

La viscosité Mooney ML (1+4) à 100°C des deux élastomères de départ, BR et NR, est respectivement égale à environ 45 et environ 85. Pour chacun des deux élastomères, plus de 80% de l'aire de la distribution des masses molaires (mesurée par SEC) est située au-delà de 100 000 g/mol.

La composition auto-obturante ci-dessus a été préparée à l'aide d'une extrudeuse mono-vis (L/D = 40) telle que schématisée à la figure 1 (déjà commentée précédemment) ; le mélange des constituants de base (BR, NR, résine) a été réalisé à une température (comprise entre 100 et 130°C) supérieure à la température de ramollissement de la résine. L'extrudeuse utilisée comportait trois alimentations (trémies) différentes (BR, NR, résine) et une pompe d'injection liquide sous pression pour la résine (injectée à une température de 100 à 110°C environ) ; lorsque les élastomères et la résine sont ainsi intimement mélangés, on a constaté que le pouvoir collant parasite de la composition diminuait de manière très significative.

L'extrudeuse ci-dessus était pourvue d'une filière permettant d'extruder le masterbatch aux dimensions voulues (par exemple sous forme d'une bandelette) vers un mélangeur externe à cylindres, pour incorporation finale des autres constituants, à savoir l'agent de réticulation (TBzTD), noir de carbone et antioxydant, à basse température maintenue à une valeur inférieure à +30°C (refroidissement des cylindres par circulation d'eau). Enfin, le plastifiant liquide a été introduit au cours d'une étape (c), après l'étape (b) d'incorporation de l'agent de réticulation (la totalité soit 3 pce dans cet exemple) sur mélangeur externe à cylindres ; cette étape (c) a été conduite à une température comprise entre 80°C et 130°C, par passage et mélangeage à travers un mélangeur-extrudeur à vis du même type que celui utilisé dans l'étape (a).

La couche 30a, disposée par exemple à la figure 2 entre la couche 30b et la cavité 29 du bandage pneumatique de la figure 2, permet de procurer au bandage pneumatique une protection efficace contre les pertes de pression dues aux perforations accidentelles, en permettant l'obturation automatique de ces perforations.

Lors d'essais, des bandages pneumatiques de type tourisme, de dimension 205/55 R16 "marque Michelin, Energy 3" ont été testés. La paroi interne des pneumatiques (comportant déjà la couche étanche à l'air 30b) a été recouverte par la couche auto-obturante (30a) précédemment décrite, d'une épaisseur de 3 mm, puis les pneumatiques vulcanisés.

Sur un des bandages pneumatiques monté et gonflé, quatre perforations de 5 mm de diamètre ont été réalisées, à travers la bande de roulement et le bloc sommet, à l'aide de poinçons qui ont été immédiatement retirés.

De manière inattendue, ce bandage a résisté à un roulage sur volant à 150 km/h, sous une charge nominale de 400 kg, sans perte de pression pendant plus de 1 500 km, distance au-delà de laquelle le roulage a été stoppé.

Sans composition auto-obturante et dans les mêmes conditions que ci-dessus, le bandage pneumatique ainsi perforé perd sa pression en moins d'une minute, devenant totalement inapte au roulage.

## Revendications

1. Procédé de fabrication d'une composition d'élastomère à propriété auto-obturante à base d'au moins (pce signifiant parties en poids pour cent parties d'élastomère solide) :
- un élastomère solide diénique insaturé ;
- entre 30 et 90 pce d'une résine hydrocarbonée ;
- 0 à moins de 30 pce de charge ;
- entre 0,5 et 15 pce de polysulfure de thiurame,
dans lequel, au cours d'une première étape ou étape (a), on prépare un masterbatch comportant au moins l'élastomère solide diénique insaturé et entre 30 et 90 pce d'une résine hydrocarbonée, en mélangeant ces différents composants dans un mélangeur à une température ou jusqu'à une température dite "de mélangeage à chaud" qui est supérieure à la température de ramollissement de la résine hydrocarbonée.

2. Procédé selon la revendication 1, dans lequel, au cours de l'étape (a) de mélangeage à chaud, l'élastomère diénique est mis au contact de la résine hydrocarbonée à l'état solide.

3. Procédé selon la revendication 1, dans lequel, au cours de l'étape (a) de mélangeage à chaud, l'élastomère diénique est mis au contact de la résine hydrocarbonée à l'état liquide.

4. Procédé selon la revendication 3, dans lequel la résine hydrocarbonée est injectée à l'état liquide dans le mélangeur.

5. Procédé selon l'une quelconque des revendications 1 à 4, dans lequel l'étape (a) de mélangeage à chaud des élastomères A et B est conduite à l'abri de l'oxygène.

6. Procédé selon l'une quelconque des revendications 1 à 5, dans lequel la température de mélangeage à chaud est supérieure à 70°C, de préférence supérieure à 80°C.

7. Procédé selon l'une quelconque des revendications 1 à 6, dans lequel l'étape (a) de mélangeage à chaud est réalisée dans un mélangeur-extrudeur à vis.

8. Procédé selon l'une quelconque des revendications 1 à 7, dans lequel au cours d'au moins une étape subséquente ou étape (b), on incorpore au masterbatch ainsi préparé, de préférence en totalité ou pour au moins 50% en poids, le polysulfure de thiurame, en mélangeant le tout, dans le même mélangeur ou dans un mélangeur différent.

9. Procédé selon la revendication 8, dans lequel l'étape (b) est réalisée dans un mélangeur-extrudeur à vis.

10. Procédé selon la revendication 8, dans lequel l'étape (b) est réalisée sur un mélangeur externe à cylindres.

11. Procédé selon l'une quelconque des revendications 8 à 10, dans lequel la température au cours de l'étape (b) est maintenue inférieure à la température de ramollissement de la résine hydrocarbonée.

12. Procédé selon l'une quelconque des revendications 8 à 10, dans lequel la température au cours de l'étape (b) est maintenue inférieure à 130°C, de préférence inférieure à 100°C.

13. Procédé selon la revendication 12, dans lequel la température au cours de l'étape (b) est maintenue inférieure à 50°C, de préférence inférieure à 40°C.

14. Procédé selon l'une quelconque des revendications 1 à 13, dans lequel est intercalée, entre les étapes (a) et (b), une étape intermédiaire de refroidissement du masterbatch afin de refroidir ce dernier à une température inférieure à la température de ramollissement de la résine hydrocarbonée.

15. Procédé selon l'une quelconque des revendications 1 à 13, dans lequel est intercalée, entre les étapes (a) et (b), une étape intermédiaire de refroidissement du masterbatch afin de refroidir ce dernier à une température inférieure à 130°C, de préférence inférieure à 100°C.

16. Procédé selon l'une quelconque des revendications 1 à 15, dans lequel l'élastomère diénique insaturé est choisi dans le groupe constitué par les polybutadiènes, le caoutchouc naturel, les polyisoprènes de synthèse, les copolymères de butadiènes, et les mélanges de tels élastomères.

17. Procédé selon l'une quelconque des revendications 1 à 16, dans lequel le taux de résine hydrocarbonée est compris dans un domaine de 45 à 75 pce.

18. Procédé selon l'une quelconque des revendications 1 à 17, dans lequel la résine hydrocarbonée présente une température de transition vitreuse qui est supérieure à 0°C, de préférence supérieure à +20°C.

19. Procédé selon l'une quelconque des revendications 1 à 18, dans lequel la résine hydrocarbonée est choisie dans le groupe constitué par par les résines d'homopolymère ou copolymère de cyclopentadiène (CPD), les résines d'homopolymère ou copolymère de dicyclopentadiène (DCPD), les résines d'homopolymère ou copolymère terpène, les résines d'homopolymère ou copolymère terpène phénol, les résines d'homopolymère ou copolymère de coupe C5, les résines d'homopolymère ou copolymère de coupe C9, les résines d'homopolymère ou copolymère d'alpha-méthyl-styrène et les mélanges de ces résines.

20. Procédé selon l'une quelconque des revendications 8 à 19, dans lequel la charge optionnelle est introduite au cours d'une étape postérieure à l'étape (a), de préférence au cours de l'étape (b).

21. Procédé selon l'une quelconque des revendications 1 à 20, dans lequel le taux de polysulfure de thiurame est compris entre 0,5 et 10 pce, de préférence dans un domaine de 1 à 5 pce.

22. Procédé selon l'une quelconque des revendications 1 à 21, dans lequel on incorpore en outre à la composition un plastifiant liquide de température de transition vitreuse (Tg) inférieure à -20°C.

23. Procédé selon la revendication 22, dans lequel le plastifiant liquide est incorporé au masterbatch au cours de l'étape (a).

24. Procédé selon la revendication 22, dans lequel le plastifiant liquide est incorporé au cours de l'étape (b).

25. Procédé selon la revendication 22, dans lequel le plastifiant liquide est incorporé au cours d'une étape (c) postérieure à l'étape (b), dans le même mélangeur ou un mélangeur différent de celui de l'étape (b).

## Patentansprüche

1. Verfahren zur Herstellung einer Elastomerzusammensetzung mit Selbstversiegelungseigenschaft auf Basis von mindestens (wobei phe Gewichtsteile pro hundert Teile festes Elastomer bedeutet):
- einem festen ungesättigten Dienelastomer;
- zwischen 30 und 90 phe eines Kohlenwasserstoffharzes;
- 0 bis weniger als 30 phe Füllstoff;
- zwischen 0,5 und 15 phe Thiurampolysulfid,
bei dem man im Lauf eines ersten Schritts oder Schritts (a) einen Masterbatch herstellt, der mindestens das feste ungesättigte Dienelastomer und zwischen 30 und 90 phe eines Kohlenwasserstoffharzes enthält, indem man diese verschiedenen Komponenten in einem Mischer bei einer Temperatur oder bis zu einer Temperatur, die als "Heißmischtemperatur" bezeichnet wird und über der Erweichungstemperatur des Kohlenwasserstoffharzes liegt, mischt.

2. Verfahren nach Anspruch 1, bei dem man im Lauf des Heißmischschritts (a) das Dienelastomer in festem Zustand mit dem Kohlenwasserstoffharz in Berührung bringt.

3. Verfahren nach Anspruch 1, bei dem man im Lauf des Heißmischschritts (a) das Dienelastomer in flüssigem Zustand mit dem Kohlenwasserstoffharz in Berührung bringt.

4. Verfahren nach Anspruch 3, bei dem man das Kohlenwasserstoffharz in flüssigem Zustand in den Mischer einträgt.

5. Verfahren nach einem der Ansprüche 1 bis 4, bei dem man den Schritt (a) des Heißmischens der Elastomere A und B unter Sauerstoffausschluss durchführt.

6. Verfahren nach einem der Ansprüche 1 bis 5, bei dem die Heißmischtemperatur mehr als 70°C und vorzugsweise mehr als 80°C beträgt.

7. Verfahren nach einem der Ansprüche 1 bis 6, bei dem man den Heißmischschritt (a) in einem Schneckenmischextruder durchführt.

8. Verfahren nach einem der Ansprüche 1 bis 7, bei dem man im Lauf mindestens eines nachfolgenden Schritts oder Schritts (b) das Thiurampolysulfid, vorzugsweise vollständig oder zu mindestens 50 Gew.-%, in den so hergestellten Masterbatch einarbeitet, indem man das Ganze in demselben Mischer oder in einem anderen Mischer mischt.

9. Verfahren nach Anspruch 8, bei dem man den Schritt (b) in einem Schneckenmischextruder durchführt.

10. Verfahren nach Anspruch 8, bei dem man den Schritt (b) in einem externen Walzenmischer durchführt.

11. Verfahren nach einem der Ansprüche 8 bis 10, bei dem man die Temperatur im Lauf des Schritts (b) unter der Erweichungstemperatur des Kohlenwasserstoffharzes hält.

12. Verfahren nach einem der Ansprüche 8 bis 10, bei dem man die Temperatur im Lauf des Schritts (b) unter 130°C und vorzugsweise unter 100°C hält.

13. Verfahren nach Anspruch 12, bei dem man die Temperatur im Lauf des Schritts (b) unter 50°C und vorzugsweise unter 40°C hält.

14. Verfahren nach einem der Ansprüche 1 bis 13, bei dem man zwischen den Schritten (a) und (b) einen Zwischenschritt des Kühlens des Masterbatch zur Abkühlung dieses Letzteren auf eine Temperatur unter der Erweichungstemperatur des Kohlenwasserstoffharzes einschiebt.

15. Verfahren nach einem der Ansprüche 1 bis 13, bei dem man zwischen den Schritten (a) und (b) einen Zwischenschritt des Kühlens des Masterbatch zur Abkühlung dieses Letzteren auf eine Temperatur von weniger als 130°C und vorzugsweise weniger als 100°C einschiebt.

16. Verfahren nach einem der Ansprüche 1 bis 15, bei dem man das ungesättigte Dienelastomer aus der Gruppe bestehend aus Polybutadienen, Naturkautschuk, synthetischen Polyisoprenen, Butadien-Copolymeren und Mischungen derartiger Elastomere auswählt.

17. Verfahren nach einem der Ansprüche 1 bis 16, bei dem der Gehalt an Kohlenwasserstoffharz in einem Bereich von 45 bis 75 phe liegt.

18. Verfahren nach einem der Ansprüche 1 bis 17, bei dem das Kohlenwasserstoffharz eine Glasübergangstemperatur von mehr als 0°C und vorzugsweise mehr als +20°C aufweist.

19. Verfahren nach einem der Ansprüche 1 bis 18, bei dem man das Kohlenwasserstoffharz aus der Gruppe bestehend aus Homopolymer- oder Copolymerharzen von Cyclopentadien (CPD), Homopolymer- oder Copolymerharzen von Dicyclopentadien (DCPD), Terpen-Homopolymer- oder -Copolymerharzen, Terpenphenol-Homopolymer- oder -Copolymerharzen, C5-Schnitt-Homopolymer- oder -Copolymerharzen, C9-Schnitt-Homopolymer- oder -Copolymerharzen, Homopolymer- oder Copolymerharzen von alpha-Methylstyrol und Mischungen dieser Harze auswählt.

20. Verfahren nach einem der Ansprüche 8 bis 19, bei dem man den fakultativen Füllstoff während eines dem Schritt (a) nachgeschalteten Schritts, vorzugsweise im Lauf des Schritts (b), einträgt.

21. Verfahren nach einem der Ansprüche 1 bis 20, bei dem der Gehalt an Thiurampolysulfid zwischen 0,5 und 10 phe und vorzugsweise in einem Bereich von 1 bis 5 phe liegt.

22. Verfahren nach einem der Ansprüche 1 bis 21, bei dem man außerdem einen flüssigen Weichmacher mit einer Glasübergangstemperatur (Tg) von weniger als -20°C in die Zusammensetzung einarbeitet.

23. Verfahren nach Anspruch 22, bei dem man den flüssigen Weichmacher während des Schritts (a) in dem Masterbatch einarbeitet.

24. Verfahren nach Anspruch 22, bei dem man den flüssigen Weichmacher im Lauf des Schritts (b) einarbeitet.

25. Verfahren nach Anspruch 22, bei dem man den flüssigen Weichmacher in einem dem Schritt (b) nachgeschalteten Schritt (c) in demselben Mischer oder in einem anderen Mischer als in Schritt (b) einarbeitet.

## Claims

1. Process for the manufacture of an elastomer composition having a self-sealing property which is based on at least (phr meaning parts by weight per 100 parts of solid elastomer):
- a solid unsaturated diene elastomer;
- between 30 and 90 phr of a hydrocarbon resin;
- from 0 to less than 30 phr of filler;
- between 0.5 and 15 phr of thiuram polysulphide,
in which, during a first stage or stage (a), a masterbatch comprising at least the solid unsaturated diene elastomer and between 30 and 90 phr of a hydrocarbon resin is prepared by mixing these various components in a mixer at a "hot compounding" temperature or up to a "hot compounding" temperature which is greater than the softening temperature of the hydrocarbon resin.

2. Process according to Claim 1, in which, during the hot compounding stage (a), the diene elastomer is brought into contact with the hydrocarbon resin in the solid state.

3. Process according to Claim 1, in which, during the hot compounding stage (a), the diene elastomer is brought into contact with the hydrocarbon resin in the liquid state.

4. Process according to Claim 3, in which the hydrocarbon resin is injected in the liquid state into the mixer.

5. Process according to any one of Claims 1 to 4, in which the hot compounding stage (a) of the elastomers A and B is carried out with the exclusion of oxygen.

6. Process according to any one of Claims 1 to 5, in which the hot compounding temperature is greater than 70°C, preferably greater than 80°C.

7. Process according to any one of Claims 1 to 6, in which the hot compounding stage (a) is carried out in a compounding screw extruder.

8. Process according to any one of Claims 1 to 7, in which, during at least one subsequent stage or stage (b), the thiuram polysulphide, preferably in its entirety or at least 50% by weight, is incorporated in the masterbatch thus prepared, everything being mixed in the same mixer or in a different mixer.

9. Process according to Claim 8, in which stage (b) is carried out in a compounding screw extruder.

10. Process according to Claim 8, in which stage (b) is carried out on an external mixer of the two-roll open mill type.

11. Process according to any one of Claims 8 to 10, in which the temperature during stage (b) is kept lower than the softening temperature of the hydrocarbon resin.

12. Process according to any one of Claims 8 to 10, in which the temperature during stage (b) is kept lower than 130°C, preferably lower than 100°C.

13. Process according to Claim 12, in which the temperature during stage (b) is kept lower than 50°C, preferably lower than 40°C.

14. Process according to any one of Claims 1 to 13, in which an intermediate stage of cooling the masterbatch is inserted between stages (a) and (b), in order to cool the masterbatch to a temperature lower than the softening temperature of the hydrocarbon resin.

15. Process according to any one of Claims 1 to 13, in which an intermediate stage of cooling the masterbatch is inserted between stage (a) and (b), in order to cool the masterbatch to a temperature lower than 130°C, preferably lower than 100°C.

16. Process according to any one of Claims 1 to 15, in which the unsaturated diene elastomer is selected from the group consisting of polybutadienes, natural rubber, synthetic polyisoprenes, butadiene copolymers and the mixtures of such elastomers.

17. Process according to any one of Claims 1 to 16, in which the content of hydrocarbon resin is within a range from 45 to 75 phr.

18. Process according to any one of Claims 1 to 17, in which the hydrocarbon resin exhibits a glass transition temperature (Tg) of greater than 0°C, preferably of greater than +20°C.

19. Process according to any one of Claims 1 to 18, in which the hydrocarbon resin is selected from the group consisting of cyclopentadiene (CPD) homopolymer or copolymer resins, dicyclopentadiene (DCPD) homopolymer or copolymer resins, terpene homopolymer or copolymer resins, terpene phenol homopolymer or copolymer resins, C₅ fraction homopolymer or copolymer resins, C₉ fraction homopolymer or copolymer resins, α-methylstyrene homopolymer or copolymer resins, and the mixtures of these resins.

20. Process according to any one of Claims 8 to 19, in which the optional filler is introduced during a stage subsequent to stage (a), preferably during stage (b).

21. Process according to any one of Claims 1 to 20, in which the content of thiuram polysulphide is between 0.5 and 10 phr, preferably within a range from 1 to 5 phr.

22. Process according to any one of Claims 1 to 21, in which a liquid plasticizer having a glass transition temperature (Tg) of less than -20°C is additionally incorporated in the composition.

23. Process according to Claim 22, in which the liquid plasticizer is incorporated in the masterbatch during stage (a).

24. Process according to Claim 22, in which the liquid plasticizer is incorporated during stage (b).

25. Process according to Claim 22, in which the liquid plasticizer is incorporated during a stage (c) subsequent to stage (b), in the same mixer or a different mixer from that of stage (b).
